# EUROPÄISCHE PATENTSCHRIFT

(11) **EP 2 454 071 B1**
(45) Veröffentlichungstag und Bekanntmachung des Hinweises auf die Patenterteilung: **13.12.2017**
(21) Anmeldenummer: 10734722.1
(22) Anmeldetag: 08.07.2010
(51) Int. Cl.: B29C 45/14, B29C 45/34

(54) **VERFAHREN UND VORRICHTUNG ZUM SPRITZGIEßEN EINES FORMTEILS**
PROCESS AND APPARATUS FOR INJECTION MOULDING A PART
PROCÉDÉ ET DISPOSITIF POUR MOULER PAR INJECTION UN OBJET

(30) Priorität: 14.07.2009 DE 102009027694
(43) Veröffentlichungstag der Anmeldung: 23.05.2012
(73) Patentinhaber: Robert Bosch GmbH, 70442 Stuttgart (DE)
(72) Erfinder: FINNAH, Guido Bernd, 70469 Stuttgart (DE); KAESSER, Jochen, 73614 Schorndorf (DE)
(86) Internationale Anmeldenummer: PCT/EP2010/059812
(87) Internationale Veröffentlichungsnummer: WO 2011/006832

(56) Entgegenhaltungen:
- DE-A1- 3 607 410
- DE-A1- 4 330 323
- DE-C1- 3 619 260
- DATABASE WPI Week 198505 Thomson Scientific, London, GB; AN 1985-028747 XP002607404 -& JP 59 224314 A (SHINKO DENKI KOGYO KK) 17. Dezember 1984 (1984-12-17)

## Beschreibung

### Stand der Technik

Die Erfindung geht aus von einer Vorrichtung zum Spritzgießen eines Formteils gemäß dem Oberbegriff des Anspruchs 1. Weiterhin geht die Erfindung aus von einem Verfahren zum Spritzgießen eines Formteils mit einer Kunststoffformmasse gemäß dem Oberbegriff des Anspruchs 8. Um in Spritzgießprozessen Teile der Kavitätswand während des Spritzgießprozesses verlegen zu können, werden im Allgemeinen Kernzüge in den Spritzgießwerkzeugen eingesetzt. Diese werden üblicherweise durch die Formöffnungsbewegung, durch hydraulische oder pneumatische Antriebe oder Elektromotoren betätigt. Die Bewegungsvorgänge der Kernzüge können auch während der Formfüllung bei geschlossener Form erfolgen, so dass die Formmasse die freigegebenen Bereiche noch füllen kann. Die Steuerung der Kernzüge erfolgt dabei üblicherweise zeitgesteuert oder über den erreichten Schneckenweg der Spritzgießmaschine. Die Füllvorgänge können zum Beispiel mithilfe von Sensoren erfasst werden. Hierdurch ist eine Steuerung der Bewegung der Kernzüge möglich. Mithilfe der Kernzüge können zum Beispiel Hinterschnitte erzeugt werden, es lässt sich die Kavität zum Einspritzen einer weiteren Komponente erweitern, es können Einlegeteile während der Umspritzung abgestützt werden, und es können Entlüftungskanäle verschlossen werden. Auch werden Kernzüge zur Formteilentformung eingesetzt.

Zur Unterstützung von bestimmten Funktionen oder zur Ermöglichung solcher Funktionen, beispielsweise zur Verstärkung von Bauteilen, oder auch um die Leitung von elektrischem Strom durch ein Kunststoffbauteil zu ermöglichen, ist es üblich, Einlegeteile in ein Kunststoffformteil einzulegen. Die Einlegeteile können dabei vollständig von der Kunststoffformmasse umschlossen werden oder nur teilweise von der Kunststoffformmasse umschlossen werden und teilweise frei liegen. Verfahren, bei denen die Einlegeteile von der Kunststoffformmasse als Trägermaterial umschlossen werden, werden auch als Insertmoulding bezeichnet, Verfahren bei denen der Kunststoff die Funktionselemente bildet und das Einlegeteil als Trägermaterial dient, werden auch als Outsertmoulding bezeichnet.

Um solche Kunststoffformteile mit Einlegeteilen herzustellen ist es üblich, zunächst das Einlegeteil im Werkzeug zu platzieren. Anschließend wird das Werkzeug geschlossen und die Kunststoffformmasse in das Werkzeug eingespritzt. Das Einspritzen der Kunststoffformmasse in das Werkzeug erfolgt dabei durch handelsübliche Spritzgießmaschinen. Die Formmasse umschließt das Einlegeteil nach Formfüllung und Abkühlen ganz oder teilweise.

Um das Einlegeteil exakt positionieren zu können und um Deformationen des Einlegeteils durch den Fülldruck zu vermeiden, können diese mechanisch gehalten werden. Hierzu werden üblicherweise feststehende Werkzeugteile oder bewegliche Kernzüge eingesetzt.

Aufgrund der eingesetzten Antriebe sind jedoch die Schaltzeiten der beweglichen Kernzüge problematisch, um einen mediendichten Verschluss des herzustellenden Kunststoffformteils im Bereich der Stützstellen, d.h. der Bereiche, in denen die Kernzüge die Einlegeteile halten, zu erzielen. Bei den derzeit eingesetzten hydraulischen oder pneumatischen Antrieben kommt es z.B. aufgrund des erforderlichen Übertragungsmediums zu Prozessschwankungen und die Präzision der Schaltzeiten nimmt ab. Zudem sind die Sensoren aufgrund der langen Schaltzeiten der Kernzüge weit vor den Kernzügen zu positionieren. Prozessschwankungen beim Spritzgießen, die über die Fließweglänge, die durch den Abstand zwischen Sensor und Kernzug definiert wird, auftreten können, führen zu unterschiedlichen Kernzugbewegungen in Bezug zur Lage der Schmelzefront. Eine frühzeitige Kernzugbewegung kann zu einer unzureichenden Positionierung der Einlegeteile führen. Die Einlegeteile können durch den Spritzdruck beispielsweise verschoben oder verbogen werden. Im Falle einer zu späten Kernzugbewegung erstarrt die Formmasse an den noch anliegenden Kernzügen und der frei gewordene Bereich kann nicht verschlossen werden oder es kann zu Rissbildungen kommen.

Eine Vorrichtung zur Herstellung von Spritzgießteilen aus mehreren Komponenten ist z.B. in DE-A 10 2006 083 727 offenbart. Hierzu wird zunächst ein Kern durch Spritzguss hergestellt, dieser im Werkzeug gehalten und anschließend eine Umhüllung um den Kern gespritzt. Ein Halten des als Einlegeteil zunächst hergestellten Vorspritzlings mit Hilfe eines Kernzuges erfolgt jedoch nicht. Eine Vorrichtung und ein Verfahren zum Spritzgießen eines Formteils gemäß dem jeweiligen Oberbegriff der Ansprüche 1 und 8 ist aus der JP59224314 bekannt.

Beim Spritzgießprozess neigen insbesondere dünnwandige Formteile verstärkt zur Bildung von Brandstellen, die aufgrund des so genannten Dieseleffekts entstehen. Durch eine gute Entlüftung der Kavität während des Einspritzvorgangs ist es möglich, diese Fehlstellen zu vermeiden. Hierzu werden Kanäle in den Formtrennungen eingebracht. Wenn konstruktiv keine ausreichend großen Entlüftungskanäle vorgesehen werden können, ist es möglich, größere Entlüftungskanäle vorzusehen, die durch Kernzüge während des Füllvorgangs aktiv geschlossen werden können. Auch hier ist jedoch mit den bekannten Antrieben ein vollständiges Schließen der Bereiche, in denen die Entlüftungskanäle durch Kernzüge vergrößert werden, problematisch.

### Offenbarung der Erfindung

Eine erfindungsgemäße Vorrichtung zum Spritzgießen eines Formteils mit einer Kunststoffformmasse umfasst ein mit einer Spritzgießmaschine verbundenes Werkzeug, wobei das Werkzeug mindestens einen Kernzug aufweist. Mit dem Kernzug ist zum Beispiel das Einlegeteil im Werkzeug positionierbar oder ein Entlüftungskanal verschließbar. Der Kernzug ist erfindungsgemäß mit einem elektromagnetischen Antrieb verbunden, um den Kernzug während des Einspritzens der Kunststoffformmasse aus dem Werkzeug bewegen zu können.

Durch die Verwendung eines elektromagnetischen Antriebs sind schnelle Bewegungen des Kernzuges und damit kurze Schaltzeiten erzielbar. Die kurze Schaltzeit hat den weiteren Vorteil, dass zum Beispiel ein Sensor, mit dem der Füllgrad im Werkzeug detektiert wird, mit nur einem geringen Abstand zum Kernzug positioniert werden kann. Hierdurch kann der Zeitpunkt, zu dem der Kernzug aus dem Werkzeug gezogen werden muss, sehr viel exakter in Bezug zum Grad der Formfüllung bestimmt werden als bei den aus dem Stand der Technik bekannten Vorrichtungen.

Ein weiterer Vorteil von elektromagnetischen Antrieben ist deren kleine Bauweise. Zudem werden anders als bei hydraulischen oder pneumatischen Antrieben keine weiteren Ventile und Verbindungen, zum Beispiel durch Rohrleitungen oder Schläuche, benötigt, sondern es bedarf lediglich einer elektrischen Verkabelung mit deren Hilfe das Schaltsignal übertragen wird. Auch ist es nicht erforderlich, zum Betrieb weitere Medien, beispielsweise bei hydraulischen Antrieben Öl oder bei pneumatischen Antrieben Luft, einzusetzen. Insbesondere gegenüber hydraulischen Antrieben hat dies weiterhin den Vorteil, dass keine Leckagen auftreten können und so keine Verunreinigungen durch austretendes Öl erzeugt werden können.

Ein elektromagnetischer Antrieb, mit dem der mindestens eine Kernzug aus dem Werkzeug bewegt werden kann, umfasst im allgemeinen mindestens eine Spule und mindestens einen Anker. Der Anker wird dabei üblicherweise in der Spule geführt. Sobald die Spule durch Anlegen eines elektrischen Stroms bestromt wird, wird der Anker aufgrund des sich dabei ausbildenden Magnetfeldes angezogen. Dies führt zu einer Bewegung des Ankers. Der Anker ist in einer Ausführungsform mit dem Kernzug verbunden, so dass aufgrund der Bewegung des Ankers der Kernzug ebenfalls bewegt wird. Durch die Verbindung des Ankers mit dem Kernzug wird eine direkte Übertragung des elektrischen Stroms in eine Kernzugbewegung erzielt. Die Verbindung zwischen Anker und Kernzug kann beispielsweise eine mechanische Übersetzung oder eine starre Verbindung sein. Dies führt zu kurzen Schaltzeiten. So lassen sich zum Beispiel mit dem elektromagnetisch angetriebenen Kernzug Schaltzeiten von 8 ms erreichen, wohingegen schaltzeitoptimierte pneumatische Antriebe Schaltzeiten im Bereich von etwa 100 ms aufweisen.

Um zur Herstellung des nächsten Bauteils eine Rückbewegung des Kernzugs in das Werkzeug zu erzielen, ist es zum Beispiel möglich, eine weitere Spule vorzusehen, die so geschaltet wird, dass durch Bestromen dieser Spule der Anker und damit der Kernzug in entgegengesetzter Richtung bewegt wird. Alternativ ist es jedoch z.B. auch möglich, ein Federelement oder einen Dauermagneten vorzusehen, die jeweils auf den Kernzug wirken, und bei nicht bestromter Spule den Kernzug in einer Anschlagposition halten. Hierbei muss jedoch die durch den Anker ausgeübte Kraft auf den Kernzug so groß sein, dass die Federkraft beziehungsweise die Magnetkraft des Dauermagneten zur Bewegung des Kernzuges überwunden wird.

Die Endanschläge des Kernzugs können durch eine Feineinstellung am Anker oder an der Lagerung des Ankers des elektromagnetischen Antriebs bzw. an der Kupplung zwischen Kernzug und Antrieb korrigiert werden.

Im Allgemeinen können durch elektromagnetische Antriebe, die eine Spule und einen darin laufenden Anker umfassen, nur kleine Hübe zurückgelegt werden. Bei Kunststoffformteilen, die durch Umspritzung eines Einlegeteils mit einer Kunststoffformmasse hergestellt werden, weist die Kunststoffformmasse jedoch im Allgemeinen nur eine geringe Wanddicke auf, so dass die mit Hilfe des elektromagnetischen Antriebs einstellbaren Hübe ausreichend sind. Wenn der Kernzug während des Füllvorganges das Einlegeteil freigibt und aus dem Kavitätsbereich bewegt wird, kann die Formmasse in den Bereich nachgeführt werden, in dem zuvor der Kernzug positioniert war und so das Werkzeug vollständig füllen. Eine mediendichte Umschließung des Einlegeteils ist möglich.

Durch eine angussferne Lage des Kernzugs kann die Formmasse zunächst das Einlegeteil weitgehend umfließen und erreicht erst zu einem späteren Zeitpunkt den Bereich des Kernzuges. Hierdurch wird das Einlegeteil schon durch die Teilumspritzung im Werkzeug stabilisiert und der Kernzug kann, ohne bereits mit Formmasse in Kontakt gewesen zu sein, verfahren.

Neben der Verwendung eines Kernzugs zum Halten eines Einlegeteils, das von der Kunststoffformmasse umspritzt wird, ist der erfindungsgemäß ausgebildete Kernzug mit elektromagnetischem Antrieb insbesondere auch vorteilhaft, um eine Entlüftung der Kavität durch einen Entlüftungskanal innerhalb eines Kernzugs zu ermöglichen. Durch die Verwendung des elektromagnetischen Antriebs ist, wie bei Verwendung des Kernzugs zum Positionieren eines Einlegeteils, ein schnelles Bewegen des Kernzugs, mit dem der Entlüftungskanal verschlossen wird, möglich, so dass auch hier eine Positionierung eines Sensors, mit dem der Füllgrad im Werkzeug detektiert wird, mit einem geringeren Abstand zum Kernzug erfolgen kann.

Auch bei einer Verwendung des Kernzugs zur Entlüftung ist eine angussferne Lage des Kernzugs für eine gute Entlüftung der Kavität von Vorteil. Erfindungsgemäß ist ein Sensor zwischen herannahender Schmelzefront und Kernzug in der Nähe des mindestens einen Kernzuges im Werkzeug positioniert, um den Füllgrad zu detektieren. Durch die Positionierung des Sensors in der Nähe des Kernzuges ist es möglich, abhängig vom Füllverlauf jeweils den richtigen Zeitpunkt zu ermitteln, zu dem der Kernzug aus dem Werkzeug bewegt werden sollte. Die Positionierung des Sensors in der Nähe des mindestens einen Kernzuges ist durch die kurzen Ansprechzeiten des elektromagnetischen Antriebs und die hohe Geschwindigkeit, die sich mit einem solchen Antrieb üblicherweise erzielen lässt, möglich.

Die Positionierung des Sensors nahe der Position des Kernzuges erlaubt eine lokal präzise Erfassung der Formfüllung nahe dem Kernzug, so dass der Kernzug schon vor Erreichen der Position durch die Füllmasse zurückgezogen sein kann.

Wenn zur Positionierung des Einlegeteils bzw. zum Verschließen von Entlüftungskanälen der Kavität mehrere Kernzüge notwendig sind oder mehrere Einlegeteile mit mehreren Kernzügen im Werkzeug positioniert werden sollen, so ist es möglich, zur Positionierung der Einlegeteile mehrere Kernzüge vorzusehen, wobei die Kernzüge mit nur einem elektromagnetischen Antrieb aus dem Werkzeug entfernt werden können. Alternativ ist es jedoch auch möglich, jeden Kernzug mit einem eigenen elektromagnetischen Antrieb vorzusehen. Jeden Kernzug mit einem eigenen elektromagnetischen Antrieb zu versehen, ist insbesondere dann bevorzugt, wenn die Kernzüge in unterschiedlicher Richtung aus dem Werkzeug entfernt werden sollen.

In einer alternativen Ausführungsform wird der Kernzug mit Hilfe von Mitteln zur Vorspannung im Werkzeug positioniert. Die Mittel zur Vorspannung werden mit Hilfe des elektromagnetischen Antriebs fixiert. Sobald der Kernzug aus dem Werkzeug entfernt werden soll, wird der elektromagnetische Antrieb so angesteuert, dass dieser die Mittel zur Vorspannung freigibt. Aufgrund der Vorspannung wird der Kernzug dann aus dem Werkzeug bewegt.

Die Erfindung betrifft weiterhin ein Verfahren zur Herstellung eines Formteils, mit einer Kunststoffformmasse in einer Spritzgießmaschine, wobei zunächst ein Einlegeteil in ein Werkzeug eingelegt und mit einem Kernzug fixiert wird oder ein Entlüftungsband von einem Kernzug freigegeben wird. Anschließend wird das Werkzeug geschlossen und die Kunststoffformmasse wird in das Werkzeug eingespritzt. Während des Füllvorgangs wird der Kernzug mit Hilfe eines elektromagnetischen Antriebs aus dem Werkzeug gezogen beziehungsweise der Entlüftungskanal wird während des Füllvorgangs mit dem Kernzug verschlossen.

Um den rechtzeitigen Zeitpunkt zum Betätigen des Kernzugs durch den elektromagnetischen Antrieb zu erkennen, wird ein Sensor in der Nähe des Kernzugs am Werkzeug positioniert. Der Sensor ist dabei ein Temperatursensor. Durch die sich ändernde Temperatur kann der Füllgrad im Werkzeug durch den Sensor erfasst werden. Im Allgemeinen werden geeignete Schwellwerte vorgegeben, wobei beim Erreichen des Schwellwertes für die Temperatur der Füllgrad so weit fortgeschritten ist, dass der Kernzug aus dem Werkzeug entfernt werden soll. Alternativ kann der Gradient des Sensorverlaufs zum Schalten des Kernzugs vorgegeben werden. So kann durch eine Temperaturänderung im Werkzeug auf den Füllgrad geschlossen werden. In einer Ausführungsform des Verfahrens wird der Kernzug vorgespannt im Werkzeug positioniert und die Vorspannung wird mit Hilfe des elektromagnetischen Antriebs gelöst, sobald der erforderliche Füllgrad erzielt ist, wobei der Kernzug dann aufgrund der Vorspannung aus dem Werkzeug bewegt wird.

### Kurze Beschreibung der Figuren

Ausführungsbeispiele der Erfindung sind in den Figuren dargestellt und werden in der nachfolgenden Beschreibung näher erläutert.

Es zeigen:
- Figur 1: eine schematische Darstellung eines Werkzeugs mit von einem Kernzug gehaltenen Einlegeteil,
- Figur 2: das in Figur 1 dargestellte Werkzeug mit freigegebenem Einlegeteil,
- Figur 3: ein Werkzeug mit einem Kernzug in einer zweiten Ausführungsform,
- Figur 4: ein Werkzeug mit einem Kernzug in einer dritten Ausführungsform,
- Figur 5: eine schematische Darstellung eines Werkzeugs mit einer von einem Kernzug verschließbaren Entlüftung.

### Ausführungsformen der Erfindung

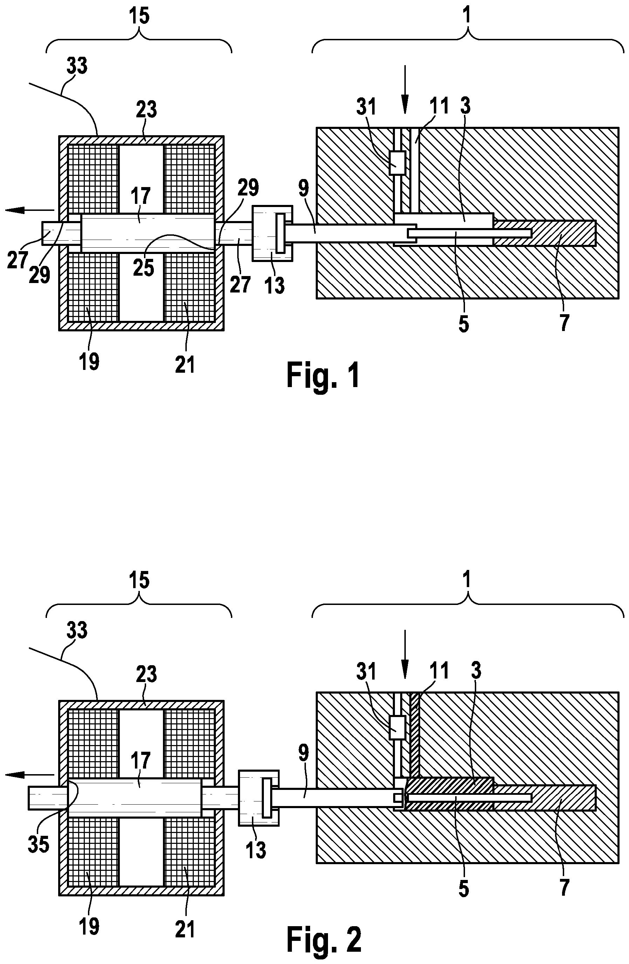

In Figur 1 ist ein Werkzeug zur Umspritzung eines Einlegeteils mit einem elektromagnetisch betriebenen Kernzug dargestellt.

Ein Werkzeug 1 zur Herstellung eines Spritzgießteils, bei dem ein Einlegeteil mediendicht mit einer Kunststoffformmasse umspritzt wird, umfasst eine Kavität 3, in die die Formmasse eingespritzt wird. Um ein Einlegeteil 5 zu umhüllen, wird dieses in die Kavität 3 eingelegt, bevor das Werkzeug 1 geschlossen wird. Das Einlegeteil 5, das von der Kunststoffformmasse umhüllt wird, kann aus jedem beliebigen Material gefertigt sein, das durch die Kunststoffformmasse, die in das Werkzeug 1 eingespritzt wird, nicht geschädigt wird. Als Material für das Einlegeteil eignen sich z.B. Thermoplaste mit einer möglichst höheren Schmelztemperatur als die Temperatur, mit der die Kunststoffformmasse in die Kavität 3 eingespritzt wird, vernetzte Kunststoffe, Keramiken oder Metalle. Der eingesetzte Werkstoff ist dabei auch von der Funktion des Einlegeteils 5 abhängig. So kann das Einlegeteil 5 z.B. ein Stanzgitter sein, das von einer Kunststoffformmasse umspritzt wird und zur Stromleitung dient. Alternativ ist es jedoch auch möglich, zum Beispiel Metallteile oder Keramikteile zu umspritzen, um die Festigkeit des herzustellenden Spritzgießteils zu erhöhen. Auch ist es möglich, ein Zweikomponentenspritzgießteil herzustellen, wobei das Einlegeteil 5 dann aus der ersten spritzgegossenen Komponente gefertigt wird.

Um eine stabile Positionierung des Einlegeteils 5 zu erzielen, wird dieses vorzugsweise mit einer Seite in einer feststehenden mechanischen Stützstelle 7 aufgenommen. Der in der feststehenden mechanischen Stützstelle 7 aufgenommene Teil des Einlegeteils 5 wird dabei nicht von der Kunststoffformmasse, die in die Kavität 3 eingespritzt wird, umhüllt. Um ein Verbiegen oder Verformen des Einlegeteils 5 beim Einspritzen der Kunststoffformmasse zu vermeiden, wird das Einlegeteil 5 in der hier dargestellten Ausführungsform an der der feststehenden mechanischen Stützstelle 7 gegenüberliegenden Seite von einem Kernzug 9 gehalten. Wenn das Einlegeteil 5 vollständig von der Kunststoffformmasse umhüllt werden soll, so ist es auch möglich, alternativ zur feststehenden mechanischen Stützstelle 7 einen zweiten Kernzug vorzusehen, der das Einlegeteil 5 an der dem Kernzug 9 gegenüberliegenden Seite hält. Auch können zur Stabilisierung des Einlegeteils 5 weitere Kernzüge vorgesehen sein.

Die Kunststoffschmelze, mit der das Einlegeteil 5 umhüllt werden soll, wird nach der Positionierung des Einlegeteils 5 und dem Schließen des Werkzeugs 1 durch einen Angusskanal 11 in die Kavität 3 eingespritzt. Hierzu ist das Werkzeug 1 mit dem Angusskanal 11 mit einer Spritzgießmaschine verbunden. Alternativ zur Spritzgießmaschine kann jedoch z.B. auch eine Kolbenpresse oder eine beliebige andere Vorrichtung, mit der sich eine geschmolzene Kunststoffformmasse in die Kavität 3 einspritzen lässt, verbunden sein. Üblich ist jedoch eine Spritzgießmaschine, in der die Kunststoffformmasse zunächst mit Hilfe einer Schnecke in einen Einspritzraum transportiert wird und dann durch eine Axialbewegung der Schnecke in die Kavität 3 eingespritzt wird.

Um das Einlegeteil 5 an der Seite, an der dieses mit dem Kernzug 9 gehalten ist, vollständig zu umhüllen, ist es notwendig, dass der Kernzug 9 das Einlegeteil 5 rechtzeitig freigibt, um den Schmelzefluss nicht zu behindern. Hierzu ist der Kernzug 9 über eine Kupplung 13 mit einem elektromagnetischen Antrieb 15 verbunden. Durch Betätigung des elektromagnetischen Antriebs 15 führt ein Anker 17, der in einer Spule 19 läuft, durch ein aufgrund eines Stromflusses in der Spule 19 entstehendes Magnetfeld einen Hub aus und bewegt so die Kupplung 13, die mit dem Anker 17 verbunden ist, und damit auch den Kernzug 9. Um den Hub des Ankers 17 zu begrenzen, sind Anker 17 und Spule 19 und gegebenenfalls mindestens eine weitere Spule 21 in einem Antriebsgehäuse 23 aufgenommen. Das Antriebsgehäuse 19 wirkt dabei gleichzeitig als Anschlag 25 für den Anker 17. Hierzu weist der Anker 17 Bereiche 27 mit einem geringeren Durchmesser auf, die durch entsprechende Öffnungen 29 im Antriebsgehäuse geführt werden. Der in den Spulen 18, 21 geführte Bereich des Ankers 17 weist einen größeren Durchmesser auf, so dass dieser am Antriebsgehäuse 23 anschlagen kann.

In der hier dargestellten Ausführungsform dient die Spule 19 für einen Rückhub des Ankers 17, mit dem der Kernzug 9 aus der Kavität 3 gezogen wird, wohingegen die weitere Spule 21 einen Vorhub erzeugt, mit dem der Kernzug 9 in die Kavität 3 geschoben wird, um ein weiteres Einlegeteil 5 zu positionieren.

Der Hub des Ankers 17 wird durch die Anschläge 25 am Antriebsgehäuse 23 festgelegt. Wenn der Weg, den der Kernzug 9 zurücklegen soll, größer ist als der Hub des Ankers 17, ist es möglich, an Stelle der Kupplung 13, wie sie hier dargestellt ist, eine Übersetzung vorzusehen, so dass der aufgrund des Ankerhubes zurückgelegte Weg des Kernzuges 9 größer ist als der Hub des Ankers 17. Eine solche Übersetzung kann z.B. durch Verwendung von Hebeln oder Zahnrädern und Zahnstangen erfolgen. Der Aufbau einer geeigneten Übersetzung ist dem Fachmann bekannt.

Um eine mediendichte Umschließung des Einlegeteils 5 zu erhalten, ist es notwendig, den Kernzug 9 aus der Kavität 3 zu entfernen, bevor die Formmasse den Kernzug 9 umschlossen hat und weiterhin erst zu einem Zeitpunkt den Kernzug 9 aus der Kavität zu ziehen, zu der das Einlegeteil 3 bereits von einem Teil der Formmasse umhüllt ist, damit durch das Herausziehen des Kernzuges 9 keine Verformung, Schädigung oder Lageänderung des Einlegeteils 5 erfolgt. Hierzu wird in der Nähe des Kernzuges 9 an der Kavität 3 ein Sensor 31 positioniert. Als Sensor 31 eignen sich Temperatursensoren. Zum Auslösen eines Schaltsignals, zu dem der elektromagnetische Antrieb 15 in Gang gesetzt wird, um den Kernzug 9 aus der Kavität 3 zu ziehen, können z.B. Messwertgradienten, Messwertintegrale oder Schwellwertüberschreitungen genutzt werden. Verzögerungszeiten zwischen Erfassen des Messsignals und Schalten des elektromagnetischen Antriebs 15 bewirken spätere Bewegungen des Kernzugs 9. Wenn der Kernzug 9 bereits mit Formmasse umschlossen ist und erst daraufhin zurückgezogen wird, kann dennoch der freigewordene Bereich durch nachströmende Formmasse verschlossen werden. Hierzu ist es jedoch notwendig, dass die Kunststoffformmasse auch noch in den Bereich gelangen kann, in dem zuvor der Kernzug 9 positioniert war.

In Figur 2 sind Werkzeug, Kernzug und elektromagnetischer Antrieb entsprechend den in Figur 1 dargestellten gezeigt, wobei der Kernzug 9 vom Einlegeteil 5 zurückgezogen ist. Um den Kernzug 9 vom Einlegeteil 5 zurückzuziehen, wird die Spule 19 über eine Stromversorgung 33 bestromt, wodurch sich ein Magnetfeld an der Spule 19 ausbildet. Aufgrund des Magnetfeldes wird der Anker 17 gegen seinen zweiten Anschlag 35 gezogen, wodurch der Kernzug 9, der mit dem Anker 17 über die Kupplung 13 verbunden ist, vom Einlegeteil 5 weg aus der Kavität 3 gezogen wird. Dadurch, dass das Einlegeteil 5 vom Kernzug 9 freigegeben wird, kann dieses vollständig von der Kunststoffformmasse umhüllt werden. Eine mediendichte Umschließung ist möglich, da keine Bindenähte oder Verbindungen zwischen unterschiedlichen Bereichen der Formmasse auftreten. Insbesondere ist es nicht erforderlich, nach Entnahme des zu erstellenden Formteiles Öffnungen im Formteil zu verschließen.

Um nach der Entnahme des Formteils ein neues Formteil herzustellen, wird die weitere Spule 21 bestromt, wodurch der Anker 17 wieder gegen den Anschlag 25 bewegt wird und dadurch der Kernzug 9 in das Werkzeug hineinbewegt wird. Ein weiteres Einlegeteil 5 kann so in der Kavität 3 positioniert werden.

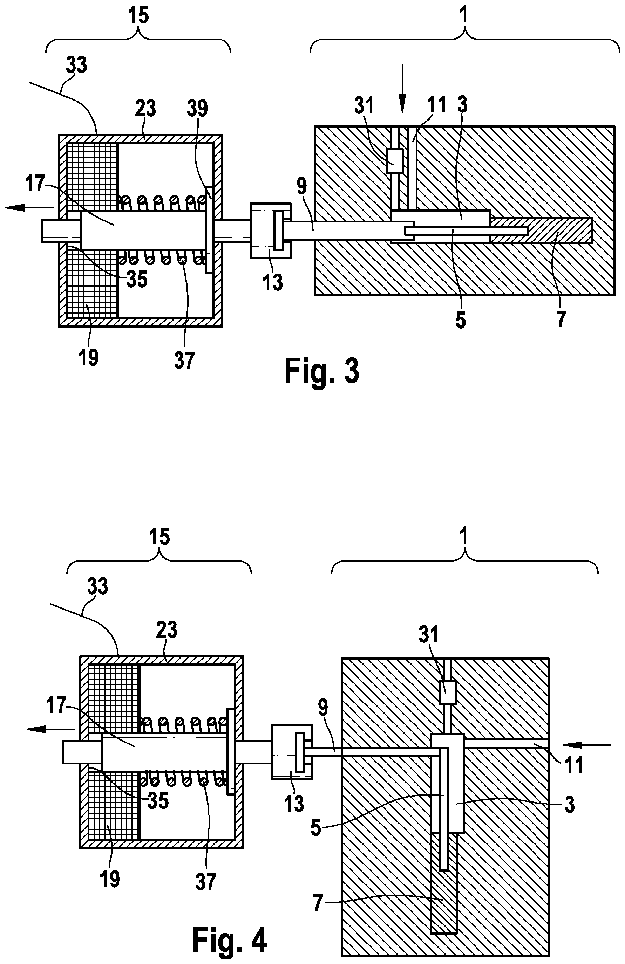

In Figur 3 ist ein Werkzeug mit einem elektromagnetisch angetriebenen Kernzug in einer zweiten Ausführungsform dargestellt.

Die in Figur 3 dargestellte Ausführungsform unterscheidet sich von der in den Figuren 1 und 2 dargestellten Ausführungsform dadurch, dass nur eine Spule 19 vorgesehen ist und zur Rückstellbewegung des Ankers 17 an Stelle der weiteren Spule 21 ein Federelement 37 verwendet wird. Als Federelement 37 kann jede beliebige, dem Fachmann bekannte Druckfeder verwendet werden. Bevorzugt ist das Federelement 37 eine als Spiralfeder ausgebildete Druckfeder. Das Federelement 37 umschließt vorzugsweise den Anker 17 und wirkt mit einer Seite gegen die Spule 19 und mit der anderen Seite gegen eine Erweiterung 39 am Anker 17.

Um den Kernzug 9 aus der Kavität 3 zu ziehen, wird die Spule 19 über die Stromversorgung 33 bestromt. Aufgrund des sich einstellenden Magnetfeldes wird der Anker 17 gegen den Anschlag 35 bewegt, wodurch der Kernzug 9 aus der Kavität 3 gezogen wird. Gleichzeitig wird das Federelement 37 vorgespannt.

Sobald das Formteil aus der Kavität 3 entnommen ist und ein neues Einlegeteil 5 in die Kavität 3 eingelegt wird, wird die Bestromung der Spule 19 aufgehoben. Das Federelement 37 entspannt und bewegt so den Anker 17 und mit dem Anker 17 den Kernzug 9 in die Kavität 3 zur Positionierung eines weiteren Einlegeteils 5.

In Figur 4 ist ein Werkzeug mit Kernzug mit elektromagnetischem Antrieb in einer dritten Ausführungsform dargestellt.

Wie auch der Kernzug 9 mit elektromagnetischem Antrieb 15, wie er in Figur 3 dargestellt ist, umfasst auch der in Figur 4 dargestellte Kernzug 9 mit elektromagnetischem Antrieb 15 eine Spule 19 zur Bewegung des Kernzugs 9 aus der Kavität 3 und ein Federelement 37, um den Kernzug 9 zurückzustellen. Im Unterschied zu der in Figur 3 dargestellten Ausführungsform ist jedoch das Werkzeug um 90° zum elektromagnetischen Antrieb 15 gedreht, so dass der Kernzug 9 nicht in axialer Richtung mit dem Einlegeteil 5 verbunden ist, sondern das Einlegeteil 5 in einem rechten Winkel vom Kernzug 9 gehalten wird. Neben dem hier dargestellten rechten Winkel ist jedoch auch jeder beliebige andere Winkel zwischen Einlegeteil 5 und Kernzug 9 denkbar.

Weiterhin ist es auch möglich, dass mit dem elektromagnetischen Antrieb 15 nicht nur ein Kernzug 9 sondern mehrere Kernzüge 9 angetrieben werden. Mit den mehreren Kernzügen 9 kann dann zum Beispiel ein großes Einlegeteil 5 gehalten werden oder aber es können mehrere einzelne Einlegeteile 5 gehalten werden. Auch ist es möglich, mehr als nur einen elektromagnetischen Antrieb 15 zur Positionierung des Einlegeteils 5 vorzusehen. So ist es z.B. möglich, das Einlegeteil 5 mit mindestens zwei Kernzügen 9 zu positionieren und dafür auf die feststehende mechanische Stützstelle 7 zu verzichten. Auf diese Weise ist es möglich, das Einlegeteil 5 vollständig mit der Kunststoffformmasse zu umschließen. Die einzelnen Kernzüge 9 können in diesem Fall jeweils unabhängig voneinander vom Einlegeteil 5 gelöst werden, so dass das Einlegeteil 5 jeweils zum optimalen Zeitpunkt für den Formbildungsprozess vom Kernzug 9 freigegeben wird. Auch ist es möglich, wenn mehrere Einlegeteile 5 vorgesehen sind, jedes Einlegeteil mit einem eigenen Kernzug 9 in der Kavität 3 zu halten. Die einzelnen Kernzüge 9 können dann jeweils nebeneinander angeordnet sein, oder aber auch in beliebigen Richtungen die einzelnen Einlegeteile halten.

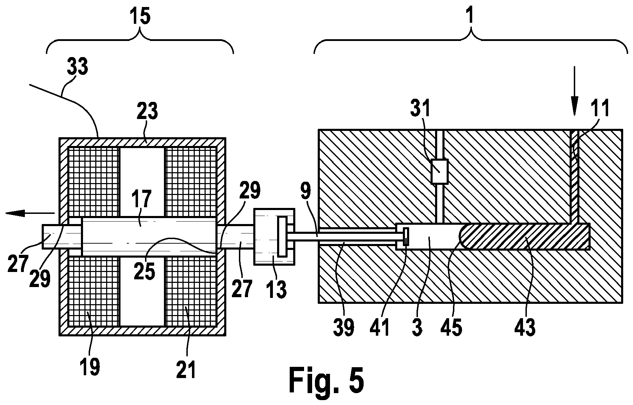

In Figur 5 ist ein Werkzeug mit einer von einem Kernzug verschließbaren Entlüftung schematisch dargestellt.

Auch zum Verschließen eines Entlüftungskanals 39 wird der Kernzug 9 mit einem elektromagnetischen Antrieb 15 betätigt. In der hier dargestellten Ausführungsform entspricht der Antrieb 15 dem in den Figuren 1 und 2 dargestellten Antrieb. Alternativ ist es jedoch auch möglich, den Kernzug 9 zum Verschließen des Entlüftungskanals 39 wie in den Figuren 3 und 4 dargestellt, zu gestalten.

Um den Entlüftungskanal 39 verschließen zu können, weist der Kernzug 9 eine Verschlussplatte 41 auf. Die Verschlussplatte 41 wird vom Kernzug, sobald dieser betätigt wird, in Richtung des Entlüftungskanals 39 gezogen und verschließt diesen. Vorzugsweise entspricht der Querschnitt der Verschlussplatte 41 dem Querschnitt des Entlüftungskanals 39, so dass der Entlüftungskanal 39 mit der Verschlussplatte 41 bündig verschlossen werden kann und eine glatte Oberfläche an der Kavität 3 entsteht, so dass ein Bauteil mit glatten Oberflächen erzeugt werden kann.

In der hier dargestellten Ausführungsform ist der Entlüftungskanal 39 dem Angusskanal 11 gegenüberliegend angeordnet. Dies hat den Vorteil, dass der Entlüftungskanal 39 vergleichsweise lange offengehalten werden kann. Über den Angusskanal 11 wird Kunststoffschmelze 43 in die Kavität 3 gedrückt. Es bildet sich eine Schmelzefront 45 aus, die durch die Kavität 3 in Richtung des Entlüftungskanals 39 wandert. Mit dem Sensor 31 wird detektiert, wann die Schmelzefront 45 in der Nähe des Entlüftungskanals 39 ist. Hierdurch kann das Verschließen des Entlüftungskanals 39 mit dem Kernzug 9 gesteuert werden. Das Verschließen kann somit erst kurz bevor die Schmelzfront 45 die Verschlussplatte 41 erreicht, erfolgen. Hierdurch ist ein weitgehend vollständiges Entlüften der Kavität 3 möglich, so dass nahezu die gesamte Luft aus der Kavität 3 über den Entlüftungskanal 39 entweichen kann und dadurch Lufteinschlüsse im Formteil weitgehend vermieden werden. Zudem können, wie oben bereits beschrieben, saubere Oberflächen des herzustellenden Formteils erzielt werden.

## Patentansprüche

1. Vorrichtung zum Spritzgießen eines Formteils mit einer Kunststoffformmasse, umfassend ein mit einer Spritzgießmaschine verbundenes Werkzeug (1), wobei das Werkzeug (1) mindestens einen Kernzug (9) aufweist, wobei der mindestens eine Kernzug (9) mit einem
elektromagnetischen Antrieb (15) verbunden ist, um den mindestens einen Kernzug (9) während des Einspritzens der Kunststoffformmasse in die Kavität (3) aus der Kavität (3) im Werkzeug (1) bewegen zu können, wobei ein Sensor (31) in der Nähe des mindestens einen Kernzugs (9) im Werkzeug (1) positioniert ist, um den Füllgrad zu detektieren, **dadurch gekennzeichnet, dass** der Sensor (31) ein Temperatursensor ist.

2. Vorrichtung gemäß Anspruch 1, **dadurch gekennzeichnet, dass** mit dem Kernzug ein Einlegeteil (5) in einer Kavität (3) im Werkzeug (1) positionierbar ist oder ein Entlüftungskanal (39) verschließbar ist.

3. Vorrichtung gemäß Anspruch 1 oder 2, **dadurch gekennzeichnet, dass** der elektromagnetische Antrieb (15) mindestens eine Spule (19; 21) und mindestens einen Anker (17) umfasst.

4. Vorrichtung gemäß einem der Ansprüche 1 bis 3, **dadurch gekennzeichnet, dass** ein Federelement (37) umfasst ist, mit dem der mindestens eine Kernzug (9) bei nicht betätigtem elektromagnetischen Antrieb (15) in die Kavität (3) im Werkzeug (1) gestellt wird.

5. Vorrichtung gemäß einem der Ansprüche 1 bis 4, **dadurch gekennzeichnet, dass** mit einem elektromagnetischen Antrieb (15) mehrere Kernzüge (9) zur Positionierung von Einlegeteilen (5) aus der Kavität (3) im Werkzeug (1) entfernt werden können.

6. Vorrichtung gemäß einem der Ansprüche 1 bis 5, **dadurch gekennzeichnet, dass** das Werkzeug (1) mehrere Kernzüge (9) umfasst, die jeweils einen elektromagnetischen Antrieb (15) aufweisen, wobei die elektromagnetischen Antriebe (15) vorzugsweise so angeordnet sind, dass die Kernzüge (9) in unterschiedliche Richtungen aus der Kavität (3) im Werkzeug (1) bewegt werden können.

7. Vorrichtung gemäß einem der Ansprüche 1 bis 6, **dadurch gekennzeichnet, dass** der mindestens eine Kernzug (9) Mittel zur Vorspannung aufweist, die mit dem elektromagnetischen Antrieb (15) gekoppelt sind.

8. Verfahren zum Spritzgießen eines Formteils mit einer Kunststoffformmasse in einer Spritzgießmaschine, wobei zunächst ein Kernzug (9) in einem Bereich einer Kavität (3) eines Werkzeugs (1) positioniert wird, das Werkzeug (1) geschlossen wird und die Kunststoffformmasse in die Kavität (3) im Werkzeug (1) eingespritzt wird, wobei während des Füllvorganges der Kernzug (9) mit Hilfe eines elektromagnetischen Antriebs (15) aus der Kavität (3) im Werkzeug (1) gezogen wird, wobei zur Erkennung des Zeitpunkts, zu dem der Kernzug (9) aus dem Werkzeug (1) gezogen wird, ein Sensor (31) in der Nähe des Kernzugs (9) am Werkzeug (1) positioniert ist, **dadurch gekennzeichnet, dass** mit dem Sensor (31) eine Temperaturänderung im Werkzeug erfasst wird und so auf den Füllgrad geschlossen wird.

9. Verfahren gemäß Anspruch 8, **dadurch gekennzeichnet, dass** vor dem Schließen des Werkzeugs ein Einlegeteil (5) in eine Kavität (3) in dem Werkzeug (1) eingelegt und mit dem Kernzug (9) fixiert wird oder ein Entlüftungskanal von dem Kernzug freigegeben wird.

10. Verfahren gemäß Anspruch 8 oder 9, **dadurch gekennzeichnet, dass** der Kernzug (9) vorgespannt das Einlegeteil (5) in der Kavität (3) im Werkzeug (1) positioniert und mit Hilfe des elektromagnetischen Antriebs (15) die Vorspannung gelöst wird und der Kernzug (9) aufgrund der Vorspannung aus der Kavität (3) im Werkzeug (1) bewegt wird.

## Claims

1. Device for injection moulding a moulded part using a plastics moulding compound, comprising a tool (1) which is connected to an injection moulding machine, wherein the tool (1) has at least one core puller (9), wherein the at least one core puller (9) is connected to an electromagnetic drive (15) in order to be able to move the at least one core puller (9) out of the cavity (3) in the tool (1) during the injection of the plastics moulding compound into the cavity (3), wherein a sensor (31) is positioned in the tool (1) in the vicinity of the at least one core puller (9) in order to detect the degree of filling, **characterized in that** the sensor (31) is a temperature sensor.

2. Device according to Claim 1, **characterized in that**, by means of the core puller, an inlay part (5) can be positioned in a cavity (3) in the tool (1) or a ventilation duct (39) can be closed off.

3. Device according to Claim 1 or 2, **characterized in that** the electromagnetic drive (15) comprises at least one coil (19; 21) and at least one armature (17).

4. Device according to one of Claims 1 to 3, **characterized in that** said device comprises a spring element (37) by means of which the at least one core puller (9) is adjusted into the cavity (3) in the tool (1) when the electromagnetic drive (15) is not actuated.

5. Device according to one of Claims 1 to 4, **characterized in that** multiple core pullers (9) for the positioning of inlay parts (5) can be removed from the cavity (3) in the tool (1) by means of one electromagnetic drive (15).

6. Device according to one of Claims 1 to 5, **characterized in that** the tool (1) comprises multiple core pullers (9) which have in each case one electromagnetic drive (15), wherein the electromagnetic drives (15) are preferably arranged such that the core pullers (9) can be moved out of the cavity (3) in the tool (1) in different directions.

7. Device according to one of Claims 1 to 6, **characterized in that** the at least one core puller (9) has preloading means which are coupled to the electromagnetic drive (15).

8. Method for injection moulding a moulded part using a plastics moulding compound in an injection moulding machine, wherein, firstly, a core puller (9) is positioned in a region of a cavity (3) of a tool (1), the tool (1) is closed, and the plastics moulding compound is injected into the cavity (3) in the tool (1), wherein, during the filling process, the core puller (9) is pulled out of the cavity (3) in the tool (1) by means of an electromagnetic drive (15), wherein, for detection of the time at which the core puller (9) is pulled out of the tool (1), a sensor (31) is positioned in the tool (1) in the vicinity of the core puller (9), **characterized in that** a change in temperature in the tool is detected with the sensor (31), and the degree of filling is inferred therefrom.

9. Method according to Claim 8, **characterized in that**, before the closure of the tool, an inlay part (5) is laid into a cavity (3) in the tool (1) and is fixed to the core puller (9), or a ventilation duct is opened up by the core puller.

10. Method according to Claim 8 or 9, **characterized in that** the core puller (9) positions the inlay part (5) in the cavity (3) in the tool (1) under the action of a preload, and, by means of the electromagnetic drive (15), the preload is eliminated and the core puller (9) is moved out of the cavity (3) in the tool (1) owing to the preload.

## Revendications

1. Dispositif pour mouler par injection un objet avec une masse de moulage en matière plastique, comprenant un outil (1) relié à une machine de moulage par injection, dans lequel l'outil (1) présente au moins un extracteur de noyau (9), dans lequel ledit au moins un extracteur de noyau (9) est raccordé à un entraînement électromagnétique (15), afin de pouvoir déplacer ledit au moins un extracteur de noyau (9) hors de la cavité (3) dans l'outil (1) pendant l'injection de la masse de moulage en matière plastique dans la cavité (3), dans lequel un capteur (31) est positionné dans l'outil (1) à proximité dudit au moins un extracteur de noyau (9), afin de détecter le degré de remplissage, **caractérisé en ce que** le capteur (31) est un capteur de température.

2. Dispositif selon la revendication 1, **caractérisé en ce qu'**une pièce d'insertion (5) peut être positionnée dans une cavité (3) dans l'outil (1) ou un canal d'évent (39) peut être fermé avec l'extracteur de noyau.

3. Dispositif selon la revendication 1 ou 2, **caractérisé en ce que** l'entraînement électromagnétique (15) comprend au moins une bobine (19; 21) et au moins un induit (17).

4. Dispositif selon l'une quelconque des revendications 1 à 3, **caractérisé en ce qu'**il comprend un élément de ressort (37), avec lequel ledit au moins un extracteur de noyau (9) est placé dans la cavité (3) dans l'outil (1) lorsque l'entraînement électromagnétique (15) n'est pas actionné.

5. Dispositif selon l'une quelconque des revendications 1 à 4, **caractérisé en ce que** plusieurs extracteurs de noyau (9) peuvent être retirés hors de la cavité (3) dans l'outil (1) avec un entraînement électromagnétique (15) pour le positionnement de pièces d'insertion (5).

6. Dispositif selon l'une quelconque des revendications 1 à 5, **caractérisé en ce que** l'outil (1) comprend plusieurs extracteurs de noyau (9), qui présentent respectivement un entraînement électromagnétique (15), dans lequel les entraînements électromagnétiques (15) sont de préférence disposés de telle manière que les extracteurs de noyau (9) puissent être déplacés dans des directions différentes hors de la cavité (3) dans l'outil (1).

7. Dispositif selon l'une quelconque des revendications 1 à 6, **caractérisé en ce que** ledit au moins un extracteur de noyau (9) présente des moyens de précontrainte, qui sont couplés avec l'entraînement électromagnétique (15).

8. Procédé pour mouler par injection un objet avec une masse de moulage en matière plastique dans une machine de moulage par injection, dans lequel on positionne d'abord un extracteur de noyau (9) dans une région d'une cavité (3) d'un outil (1), on ferme l'outil (1) et on injecte la masse de moulage en matière plastique dans la cavité (3) dans l'outil (1), dans lequel pendant l'opération de remplissage on tire l'extracteur de noyau (9) hors de la cavité (3) dans l'outil (1) au moyen d'un entraînement électromagnétique (15), dans lequel, pour déterminer l'instant auquel on tire l'extracteur de noyau (9) hors de l'outil (1), un capteur (31) est positionné à proximité de l'extracteur de noyau (9) sur l'outil (1), **caractérisé en ce que** l'on détecte une variation de température dans l'outil avec le capteur (31) et on en déduit le degré de remplissage.

9. Procédé selon la revendication 8, **caractérisé en ce qu'**avant la fermeture de l'outil on introduit une pièce d'insertion (5) dans une cavité (3) dans l'outil (1) et on la fixe avec l'extracteur de noyau (9) ou on libère un canal d'évent de l'extracteur de noyau.

10. Procédé selon la revendication 8 ou 9, **caractérisé en ce que** l'extracteur de noyau (9) positionne sous précontrainte la pièce d'insertion (5) dans la cavité (3) dans l'outil (1) et on supprime la précontrainte à l'aide de l'entraînement électromagnétique (15) et on déplace l'extracteur de noyau (9) en raison de la précontrainte hors de la cavité (3) dans l'outil (1).
